# EUROPÄISCHE PATENTANMELDUNG

(11) **EP 0 659 480 A1**
(43) Veröffentlichungstag der Anmeldung: **28.06.1995**
(21) Anmeldenummer: 93120997.7
(22) Anmeldetag: 27.12.1993
(51) Int. Cl.: B01J 35/04, F01N 3/28

(54) **Metallischer Trägerkörper mit gesinterter Zellstruktur**

(71) Anmelder: SUT-SYSTEM- UND UMWELTTECHNIK GmbH, D-09618 Brand-Erbisdorf (DE)
(72) Erfinder: Scheidling, Mathias, Dipl. Ing., D-09599 Freiberg/Sa. (DE)

(57) **Zusammenfassung**

Katalysatorensysteme für Abgase von Verbrennungsmotoren werden zukünftig motornah angeordnet.
Dabei sind sie hohen Temperaturen und hohen mechanischen Belastungen ausgesetzt. Bisherige Systeme erfüllen diese Forderungen nicht.

Bei der vorgeschlagenen Lösung werden Trägerfolien (1) aus Metall mit Sintermetallpulver (2) beschichtet, zu einem Trägersystem (4) zusammengefügt und unter hoher Temperatur miteinander versintert. Katalysatoren (3) können dabei dem Sintermetallpulver (2) vor dem Sinterprozeß zugegeben oder nachträglich aufgebracht werden. Durch das Versintern der Zellstruktur des Trägersystems (4) in seinen Knotenpunkten entsteht ein mechanisch festes, hochtemperaturbeständiges Trägersystem (4) für motornahe Anordnung bei Verbrennungsmotoren.

Das Sintermetallpulver - Beschichtungsverfahren läßt eine Vielzahl von Oberflächenvergrößerungen der Trägersysteme zu.

## Beschreibung

Die Erfindung bezieht sich auf einen metallischen Trägerkörper, mit gesinterter Zellstruktur, dessen Temperaturbeständigkeit und mechanische Festigkeit für eine motornahe Anordnung verbessert worden ist. Als Anwendungsgebiete sind insbesondere Abgasanlagen von Verbrennungsmotoren und Brennerbauteile für industrielle Anlagen zu nennen.

Als Katalysatoren zum Reinigen von Abgasen aus Verbrennungsprozessen und insbesondere aus Kraftfahrzeugen werden im allgemeinen metallische oder keramische Katalysatorträger verwendet.

Die metallischen Trägerkörper werden dabei vor dem Aufbringen der keramischen Katalysatorenträgerschicht thermisch vorbehandelt und bestehen dazu aus Sonderwerkstoffen. Die zu einem Trägerkörper zusammengefügten Metallmonolithe aus Trägerfolien werden durch eine Lötverbindung oder mechanisch gehalten.
In neuerer Zeit wird vorgeschlagen, die Katalysatoren zur weiteren Absenkung der Abgaswerte motornah anzuordnen, wobei der Katalysator sehr hohen Temperaturen und mechanischen Belastungen ausgesetzt wird.
Die Verbindungstechnologie der Katalysatorenträger durch Lötung oder mechanische Befestigung ist jedoch nicht ausreichend, da das Lot bei hohen Temperaturen erweicht und die Pulsation an den Einzelzylindern von Verbrennungsmotoren die mechanische Haltbarkeit zerstört.

Aus der DE 3528208A1 ist ein Verfahren zur Herstellung metallischer Katalysatorenträger bekannt, bei dem Metallfolien zu einem Träger gewickelt und anschließend verlötet werden.
Dieses Verfahren hat sich in der Praxis für den niederen und mittleren Temperaturbereich bewährt, jedoch sind durch die Löttechnologie in der Hochtemperaturanwendung Grenzen gesetzt.
Der Katalysatorträger wird in zusammengebauter Form wärmebehandelt zur Erzeugung einer Oberflächenoxidschicht und danach zusätzlich mit einer keramischen Katalysatorträgerschicht beschichtet. Erst auf diese keramische Katalysatorträgerschicht sind die Katalysatoren, in der Regel Edelmetalle, aufzubringen.

In der DE 3640025A1 wird ein metallischer Katalysatorträger beschrieben, dessen Folienmaterial aus Sonderwerkstoffen besteht, damit sich die für die keramische Katalysatorträgerbeschichtung erforderliche Oxidschicht an der Folienoberfläche durch Wärmebehandlung ausbildet.

Das Verfahren zeigt die Kompliziertheit des Verbundes der Metallträgeroberfläche und der keramischen Katalysatorträgerschicht.

Aus der DE 3838295A1 ist ein verfahren zur Herstellung eines metallischen Katalysatorträgers bekannt, bei dem das Folienmaterial vor dem Zusammenfügen zu einem Trägersystem wärmebehandelt und mit einer keramischen Katalysatorträgerschicht beschichtet wird. Die fertig beschichtete Katalysatorträgerfolie wird danach zu einem Katalysatorträger gewickelt und mechanisch durch Stifte oder andere Halteelemente in einem Gehäuse befestigt. Diese Art der mechanischen Befestigung hat sich nur bei sehr gering pulsierenden Abgasströmen bewährt und ist für die zylindernahe Anordnung in Einzelabgasleitungen von Ein-und Mehrzylindermotoren ungeeignet.

Der Erfindung liegt die Aufgabe zugrunde, einen metallischen Tragerkörper derart zu schaffen, daß dieser sehr hohen Abgastemperaturen und hohen mechanischen Belastungen in einer motornahen Anordnung bei Verbrennungsmotoren standhält.

Die Aufgabe wird erfindungsgemäß durch einen metallischen Trägerkörper mit gesinterter Zellstruktur aus der im Anspruch 1 gekennzeichneten Maßnahme gelöst.

Hierbei werden die metallischen Trägerfolien mit Sintermetallpulver und Katalysatoren beschichtet, zu einem Trägersystem zusammengefügt und danach die beschichteten Trägerfolien miteinander versintert.
Dieses hat zur Folge, daß beim Sintern der Folien zu einem Trägerkörper auf der gesamten Folienoberfläche eine große, rauhe und ungleichförmige Struktur entsteht, die Folien in den Berührungspunkten mechanisch fest verbunden, und die Katalysatoren fest in der gesinterten Oberfläche der Folien verankert sind.
Als Katalysatoren können verschiedene Edelmetalle, Nichtedelmetalle oder ein Gemisch von beiden Verwendung finden.

Für die bessere Haftfähigkeit des Sintermetallpulvers mit oder ohne Katalysatoren werden dem Sintermetallpulver keramische oder organische Binder, die vorzugsweise in einer wässrigen Lösung gelöst sind, zugesetzt. Das Sintermetallpulver ist dabei in der Lösung gleichmäßig verteilt und fällt auch bei tagelangem Ruhezustand nicht aus.
Danach wird das als Lösung vorhandene Sintermetallpulver auf die Trägerfolie aufegbracht. Dies kann durch Tauchen, Aufspritzen, Aufrollen, elektrostatisch oder im Plasmaspritzverfahren erfolgen.
Die Trägerfolien werden einseitig oder doppelseitig mit Sintermetallpulver und Katalysatoren beschichtet.

Eine weitere Verbesserung der Haftfähigkeit des gelösten Sintermetallpulvers mit der Folienoberfläche bewirkt die thermische, chemische oder mechanische Vorbehandlung der Trägerfolie.
Als Vorteil zur Verbesserung bei der Fertigung hat sich eine Vorsinterung bei niedriger Temperatur der Trägerfolie vor seinem Zusammenbau zu einem Trägersystem erwiesen.

Die Wirkung eines Katalysators hängt wesentlich von den strömungsmechanischen Eigenschaften seines Trägersystems ab. Dabei hat auch die Oberflächenstruktur der auf der Trägerfolie aufgebrachten Katalysatorträgerschicht eine große Bedeutung zur Verbesserung des turbulenten Strömungsverlaufes in den Kanälen des Trägersystems. Deshalb werden die einzelnen Trägerfolien nur punkt- oder abschnittsweise mit Sintermetallpulver beschichtet.
Derartige Wirkungen werden auch durch eine Beimischung von porenbildenden Stoffen zum Sintermetallpulver, unterschiedliche Korngrößenstruktur des Sintermetallpulvers oder einer zusätzlichen keramischen Trägerschicht auf den gesinterten Träger erzielt.

Eine weitere Maßnahme zur Steigerung der Oberflächenaktivität mit dem Abgas ist die Einbringung und Ausrichtung von nadel - oder tropfenförmigen Kornstrukturen in die Sintermetallpulverschicht. Dabei wird die größte Wirkung bei senkrechter Ausrichtung der nadel- oder tropfenförmigen Körner senkrecht zur Strömungsachse erreicht.

Durch das Versintern bei hohen Temperaturen des gesamten Katalysatorträgers entsteht ein thermisch und mechanisch fester Körper, der den Bedingungen eines motornahen Einbaus standhält.

Der erfindungsgemäße Trägerkörper hat ferner den Vorteil, daß eine thermische Vorbehandlung der Trägerfolien zur Erzeugung einer Oxidschicht zum sicheren Anhaften einer keramischen Katalysatorträgerschicht entfallen kann und keine Sonderwerkstoffe als Trägerfolie verwendet werden müssen.
Durch den erfindungsgemäßen Trägerkörper mit gesinterter Zellstruktur wird außerdem die Festigkeit der Katalysatorträgerschicht im Verbund mit der Katalysatorfolie erhöht, ein Ausblasen oder Ablösen der Katalysatorträgerschicht wird sicher verhindert.

Ein weiterer Vorteil bei der Herstellung des metallischen Trägerkörpers mit gesinterter Zellstruktur ist es, daß auf eine keramische Katalysatorträgerschicht völlig verzichtet werden kann, was eine Vereinfachung und kostengünstige Fertigung bewirkt.

Ein weiterer wesentlicher Vorteil ist es, daß der Träger mit gesinterter Zellstruktur einfacher zu recyclen ist, da eine Trennung Metall und Keramik nicht erforderlich ist.

Die Erfindung wird nachfolgend unter Bezugnahme auf die beigefügten Zeichnungen näher erläutert.
- Fig. 1: ist eine schematische Darstellung eines Katalysatorträgerquerschnittes mit aufgebrachter Sintermetallschicht.
- Fig. 2: zeigt eine schematische Darstellung eines Katalysatorträgerschnittes mit aufgebrachten, gerichteten Kornstrukturen in der Sintermetallschicht.
- Fig. 3: zeigt eine schematische Darstellung eines montierten Katalysatorträgers mit Gehäuse.
- Fig. 4: zeigt das dazugehörige Verfahren zur Herstellung des metallischen Trägerkörpers mit gesinterter Zellstruktur.

Katalysatorträger werden aus dünnen Katalysatorträgerfolien, die vorher profiliert, geschlitzt, gepreßt oder andersartig geformt sind, hergestellt.
Auf diese Trägerfolien wird zur Vergrößerung der wirksamen Oberfläche eine Katalysatorträgerschicht, die bei bisherigen Systemen aus Keramik besteht, aufgebracht und in diese danach die Katalysatoren (3) eingelagert.

Das hervorragende Merkmal der Erfindung besteht darin, die Trägerfolien (1) nach ihrer Profilierung mit Sintermetallpulver (2) beschichtet werden.
Das Sintermetallpulver (2) wird dazu mit verschiedenen keramischen oder organischen Bindemitteln, sowie Stoffen, die den Sinterprozeß beschleunigen oder verbessern, versetzt und auf die Trägerfolie (1) durch Aufspritzen, Aufrollen, elektrostatisch, im Tauchverfahren oder Plasmaspritzverfahren aufgebracht. Die Trägerfolie (1) kann zur Verbesserung der Haftfähigkeit des aufzubringenden Sintermetallpulvers (2) thermisch oder chemisch vorbehandelt sein. Katalysatoren können dabei direkt beim Beschichtungsvorgang in das mit Bindemitteln versehene Sintermetallpulver (2) zugegeben werden. Es können sowohl Edelmetalle, wie auch Nichtedelmetalle verwendet werden.
Die beschichteten Trägerfolien (1) werden danach zu einem Trägersystem (4) zusammengefügt und in ein Gehäuse verpackt.

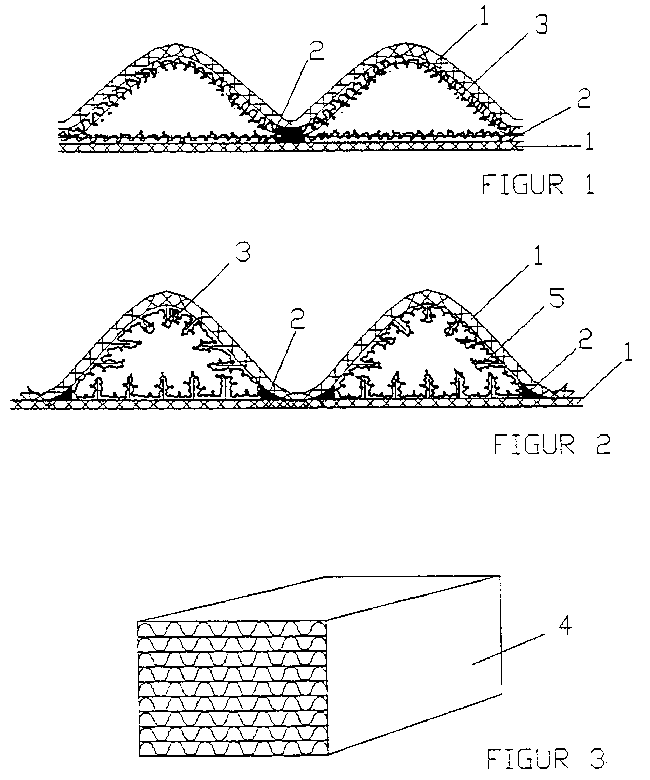

Figur 1 zeigt einen Querschnitt eines Katalysatorträgersystems, bestehend aus einer glatten und einer gewellten Trägerfolie (1), die mit einer Katalysatorträgerschicht beschichtet ist. Wichtig dabei ist, daß sich das Sintermetallpulver (2) in den Knotenpunkten zwischen den Trägerfolien (1) und gleichmäßig auf der ganzen Trägerfolienoberfläche befindet.

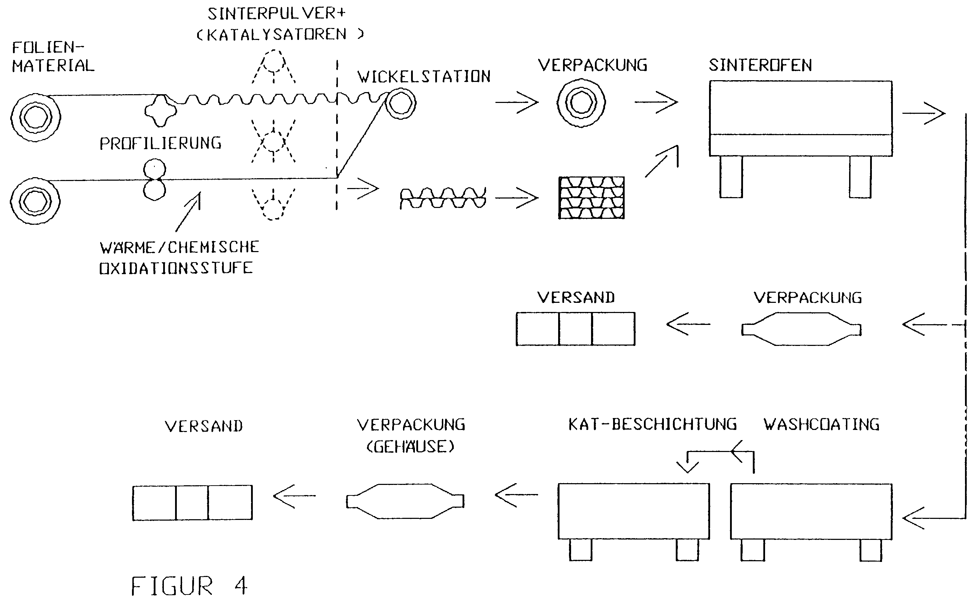

In Figur 3 ist ein zusammengefügtes Trägersystem (4) in einem Gehäuse schematisch dargestellt.

Der verpackte Trägerkörper (4) wird in einem Sinterofen unter Vakuum bei hohen Temperaturen gesintert. Dabei entsteht ein mechanisch fester Trägerkörper durch die Versinterung der einzelnen Trägerfolien (1) an seinen Knotenpunkten und eine sehr große, rauhe Oberfläche auf der gesamten Trägerfolie (1).

Die für die Schadstoffreduzierung verantwortlichen Katalysatoren (3) werden entweder dem Sintermetallpulver (2) vor dem Aufbringen auf die Trägerfolie (1) zugegeben oder in einem gesonderten Verfahrensschritt auf den gesinterten Trägerkörper (4) aufgebracht.

Figur 4 zeigt schematisch den Verfahrensablauf zur Herstellung eines metallischen Trägerkörpers mit gesinterter Zellstruktur.

## Patentansprüche

1. Metallischer Trägerkörper mit gesinterter Zellstruktur, vorzugsweise für Katalysatoren, bestehend aus einzelnen glatten, gewellten, geprägten, gelochten oder mit Strömungsleiteinrichtungen versehenen Metallfolien, die durch Wickelverfahren oder Schichtungsverfahren zu einem Träger zusammengefügt sind, gekennzeichnet dadurch, daß die Trägerfolien mit Sintermetallpulver und Katalysatoren beschichtet werden, die Trägerfolien zu einem Trägersystem zusammengefügt werden und danach die beschichteten Trägerfolien miteinander versintert werden.

2. Metallischer Trägerkörper mit gesinterter Zellstruktur nach Anspruch 1, gekennzeichnet dadurch, daß dem Sintermetallpulver (2) verschiedene Katalysatoren (3) beigemischt werden.

3. Metallischer Trägerkörper mit gesinterter Zellstruktur nach den Ansprüchen 1 bis 2, gekennzeichnet dadurch, daß dem Sintermetallpulver(2) keramische oder organische Binder zugesetzt werden.

4. Metallischer Trägerkörper mit gesinterter Zellstruktur nach den Ansprüchen 1 bis 3, gekennzeichnet dadurch, daß das Sintermetallpulver (2) aufgespritzt, aufgerollt, elektrostatisch, im Tauchverfahren oder Plasmaspritzverfahren aufgebracht wird.

5. Metallischer Trägerkörper mit gesinterter Zellstruktur nach den Ansprüchen 1 bis 4, gekennzeichnet dadurch, daß das Versintern der einzelnen Trägerfolien (1) zu einem Trägersystem (4) unter Schutzgasatmosphäre durchgeführt wird.

6. Metallischer Trägerkörper mit gesinterter Zellstruktur nach den Ansprüchen 1 bis 5, gekennzeichnet dadurch, daß die Trägerfolie (1) vor dem Aufbringen der Sintermetallpulverschicht thermisch oder chemisch vorbehandelt wird.

7. Metallischer Trägerkörper mit gesinterter Zellstruktur nach den Ansprüchen 1 bis 6, gekennzeichnet dadurch, daß die Trägerfolie (1) mit der aufgebrachten Sintermetallpulverschicht (2) vor dem Zusammenfügen zu einem Trägersystem (4) eine Vorsinterstufe durchläuft.

8. Metallischer Trägerkörper mit gesinterter Zellstruktur nach den Ansprüchen 1 bis 7, gekennzeichnet dadurch,daß nur eine der beiden nebeneinander liegenden Trägerfolien (1) mit Sintermetallpulver (2) und Katalysatoren (3) beschichtet wird.

9. Metallischer Trägerkörper mit gesinterter Zellstruktur nach den Ansprüchen 1 bis 8, gekennzeichnet dadurch, daß das Sintermetallpulver (2) mit oder ohne Katalysatoren (3) nur punkt-oder abschnittsweise auf die Trägerfolien (1) aufgebracht wird.

10. Metallischer Trägerkörper mit gesinterter Zellstruktur nach den Ansprüchen 1 bis 9, gekennzeichnet dadurch, daß dem Sintermetallpulver (2) porenbildende Stoffe beigemischt sind.

11. Metallischer Tragerkörper mit gesinterter Zellstruktur nach den Ansprüchen 1 bis 10, gekennzeichnet dadurch, daß nach dem Versintern der Trägerfolien (1) zu einem Trägersystem (4) dieser mit einer keramischen Katalysatorenträgerschicht und Katalysatoren (3) beschichtet wird.

12. Metallischer Trägerkörper mit gesinterter Zellstruktur nach den Ansprüchen 1 bis 11, gekennzeichnet dadurch, daß die Trägerfolien (1) einseitig oder doppelseitig mit Sintermetallpulver (2) beschichtet werden.

13. Metallischer Trägerkörper mit gesinterter Zellstruktur nach den Ansprüchen 1 bis 11, gekennzeichnet dadurch, daß das Sintermetallpulver (2) auf der Oberfläche der Trägerfolien (1) unterschiedliche Korngrößen und Verteilungen aufweist.

14. Metallischer Trägerkörper mit gesinterter Zellstruktur nach den Ansprüchen 1 bis 11, gekennzeichnet dadurch, daß das Sintermetallpulver (2) derart aufgebaut ist, daß einzelne Kornstrukturen nadelförmig oder tropfenförmig ausgebildet sind, und sich während oder vor der Sinterstufe senkrecht oder in einem bestimmten Winkel zur Strömungsachse des Trägersysteme und Trägerfolienoberfläche ausrichten.
